Europäisches Patentamt

European Patent Office

Office européen des brevets

(19)

(11) Veröffentlichungsnummer: **0 007 061**
**B1**

(12)    **EUROPÄISCHE PATENTSCHRIFT**

(45) Veröffentlichungstag der Patentschrift: **18.05.83**

(21) Anmeldenummer: **79102256.9**

(22) Anmeldetag: **04.07.79**

(51) Int. Cl.³: **C 08 F 10/00, C 08 F 4/64, C 08 F 4/02, C 08 F 297/08**

(54) **Verfahren zur Polymerisation von 1-Oelfinen.**

(30) Priorität: **07.07.78 DE 2830039**

(43) Veröffentlichungstag der Anmeldung:
**23.01.80 Patentblatt 80/2**

(45) Bekanntmachung des Hinweises auf die Patenterteilung:
**18.05.83 Patentblatt 83/20**

(84) Benannte Vertragsstaaten:
**BE DE FR GB IT NL**

(56) Entgegenhaltungen:
**DE - A - 1 720 787**
**DE - A - 1 958 046**
**DE - A - 2 230 672**
**DE - A - 2 461 677**

(73) Patentinhaber: **HOECHST AKTIENGESELLSCHAFT**
**Postfach 80 03 20**
**D-6230 Frankfurt/Main 80 (DE)**

(72) Erfinder: **Rust, Kurt, Dr.**
**Fasanenstrasse 9**
**D-6233 Kelkheim (Taunus) (DE)**
Erfinder: **Brinkmann, Ludwig, Dr.**
**Geisenheimer Strasse 88**
**D-6000 Frankfurt/Main 71 (DE)**
Erfinder: **Lutz, Paul**
**Eisenbahnstrasse 22**
**D-6093 Flörsheim am Main (DE)**

# 0 007 061

## Verfahren zur Polymerisation von 1-Olefinen

Die vorliegende Erfindung bezieht sich auf ein Verfahren zur Polymerisation von 1-Olefinen, insbesondere in Richtung auf die Herstellung von isotaktischem Polypropylen, bei welchem auf eine Katalysatorentfernung verzichtet werden kann.

Es sind Katalysatoren beschrieben worden, die durch Beschichten von feinteiligen Salzen des Magnesiumchloridtyps mit Titan- oder Vanadiumhalogeniden hergestellt sind (vgl. US—PS 32 38 146). Mit diesem Katalysatoren kann zwar Propylen mit befriedigenden Ausbeuten polymerisiert werden, nachteilig ist aber, daß nur bis zu 1 Gewichtsprozent des Übergangsmetallhalogenids auf den Träger aufgebracht werden können. Das mit diesen Kontakten erhaltene Polypropylen enthält daher verhältnismäßig große Mengen Katalysatorreste und muß daher nach der Polymerisation gereinigt werden.

Weiterhin sind Katalysatoren für die Polymerisation von $\alpha$-Olefinen bekannt geworden, die durch Reaktion zwischen einer metallorganischen Verbindung eines Metalls der Gruppe I bis III des Periodensystems mit dem Produkt entstehen, das durch Mahlen eines teilweise reduzierten Halogenids eines Übergangsmetalls mit einer unter 50 Mol-% liegenden Menge eines Halogenids der Gruppe II oder III erhalten worden ist (vgl. US—PS 31 30 003). Als teilweise reduziertes Übergangsmetall wird vorzugsweise $TiCl_3$, hergestellt durch Reduktion von $TiCl_4$ mit Wasserstoff oder Ti, verwendet. Das bevorzugte Halogenid der Metalle der Gruppen II und III ist Aluminiumchlorid. Die Stereospezifität der mit diesen Katalysatoren erhaltenen Propylenpolymerisate ist zwar befriedigend, die verhältnismäßig niedrige Ausbeute jedoch macht eine Reinigung des Polypropylens erforderlich. Nachteilig ist weiterhin, daß die Ausbeute in Anwesenheit von Wasserstoff, der zur Regelung des Molekulargewichts benötigt wird, beträchtlich abfällt.

Ebenso ist ein Katalysatorsystem beschrieben worden, das durch Umsetzen des Reaktionsproduktes aus einem Titanhalogenid und einer aluminiumorganischen Verbindung mit dem Komplex aus einem Friedel-Crafts-Halogenid und einer die Stereospezifität regulierenden organischen Verbindung erhalten wird (vgl. GB—PS 10 01 820). Als Friedel-Crafts-Halogenide werden beispielsweise Alumiumchlorid, Zinkchlorid oder Magnesiumchlorid verwendet. Als stereoregulierende Verbindungen, die im allgemeinen Elektronendonatorverbindungen sind, werden u.a. eingesetzt: Hexamethylphosphorsäuretriamid, Diphenyläther oder Dimethylformamid. Mit dem beschriebenen Katalysatorsystem kann man zwar ein Polypropylen mit einer Stereospezifität von über 90% herstellen, jedoch ist die erzielbare Ausbeute unbefriedigend.

Es ist ein Weiteres Katalysatorsystem beschrieben worden, das durch Mahlen von $TiCl_3$ mit Magnesiumchlorid hergestellt wird (vgl. DE—AS 19 58 046). Die Menge an $TiCl_3$ beträgt dabei wenigen als 50 Gewichtsprozent bezogen auf das eingesetzte Magnesiumchlorid. Als Aktivatoren werden aluminiumorganische Verbindungen eingesetzt. Diese Kontakte bringen bei der Äthylen-Polymerisation gute Ergebnisse, sind aber für die Polymerisation von Propylen wenig geeignet.

Auch wurden Katalysatoren bekannt, die durch Mahlen von Magnesiumhalogeniden mit Komplexen aus Titanhalogeniden mit Elektronendonatorverbindungen erhalten wurden, wobei die Titanhalogenidmenge 0,01 bis 30 Gewichtsprozent bezogen auf die Magnesiumhalogenidmenge beträgt (vgl. DE—PS 20 29 992). Als Aktivatoren wurden Aluminiumalkylverbindungen verwendet. Diese Katalysatoren bringen bei der Polymerisation von Äthylen gute Ergebnisse, sind aber für die Polymerisation von Propylen wenig geeignet.

Weiterhin sind Katalysatoren bekannt geworden, die durch Mahlen von Magnesium- bzw. Manganhalogeniden mit Titantetrahalogenid-Elektronendonator-Komplexen hergestellt wurden und zusammen mit dem Additions- oder Substitutionsreaktionsprodukt aus Aluminiumalkylen und Elektronendonatorverbindungen zur Polymerisation von Propylen eingesetzt werden (vgl. DE—OS 22 30 672). Diese Katalysatoren zeichnen sich durch hohe Aktivität bei der Propylenpolymerisation aus. Die Stereospezifität (isotaktischer Index) ist kleiner als 94%.

Trotz der hohen Ausbeuten ist auch hier der Anteil von Katalysatorresten in den Polymerprodukten nicht für alle Zwecke hinreichend niedrig.

Schließlich ist ein Katalysatorsystem bekannt, das die Polymerisation von Propylen mit besonders hohen Ausbeuten ermöglicht (vgl. DE—OS 26 43 143). Magnesiumchlorid wird mit einer Elektronendonatorverbindung, insbesondere mit einem Ester einer aromatischen Carbonsäure, wie Benzoesäureäthylester, gemahlen. Das Mahlgut wird mit einer größeren Menge Titantetrachlorid umgesetzt. Die so gewonnene Katalysatorkomponente wird mit einem Kohlenwasserstoff gut ausgewaschen. Als Aktivator wird ein Aluminiumtrialkyl in Kombination mit einem Ester einer aromatischen Carbonsäure, wie beispielsweise p-Toluylsäureäthylester, eingesetzt.

Nachteilig its bei diesem Katalysatorsystem die Notwendigkeit des Arbeitens mit großen Titantetrachloridmengen, da nur eine kleine Menge Ti fixiert wird. Weiter enthält das mit diesem Katalysatorsystem erhaltene Polypropylen verhältnismäßig große Mengen an Feinanteilen unter 100 $\mu$m. Nachteilig ist ferner der hohe Aschegehalt, bedingt durch die große Trägermenge, und der Cl-Gehalt von größer als 50 ppm.

Außerdem war ein Katalysatorsystem bekannt, dessen Übergangsmetallkomponente gebildet

2

# 0 007 061

wird aus dem Reaktionsprodukt, das aus einem festen Magnesiumdihalogenidträger, einem Elektronendonor und einer metallorganischen Verbindung geformt wird, und einer Titanverbindung und einer metallorganischen Verbindung von Metallen der Gruppen I—III des Periodensystems (vgl. DE—OS 24 61 677). Diese Übergangsmetallkomponente wird zusammen mit weiterer metallorganischer Verbindung als Aktivator zum Polymerisieren von Olefinen, vorzugsweise Äthylen, eingesetzt. Bei der Verwendung dieses Katalysatorsystems zur Polymerisation von Propylen erhält man eine Polymerisat mit einem hohen Gehalt an ataktischem Polymeren.

Es bestand nun die Aufgabe, ein Katalysatorsystem zu finden, welches so hohe Ausbeuten liefert, daß eine Aufbereitung des Polymeren entfallen kann, außerdem eine ausreichende Stereospezifität aufweist, damit der Anteil an ataktischem Polymer äußerst gering ist. Zudem soll dan Katalysatorsystem bei der Herstellung keinen Überschluß an Übergangsmetallhalogenid erfordern und das gewonnene Polymere einheitlich grobkörnig sein. Schließlich soll der Halogengehalt im Polymeren sehr niedrig sein.

Es wurde nun gefunden, daß die vorgenannte Aufgabe gelöst werden kann, wenn man ein Magnesiumhalogenid zunächst mit einem Elektronendonor und/oder einem Cyclopolyen umsetzt, das entstandene Produkt mit einer $TiCl_3$-haltigen Verbindung in Berührung bringt, als Aktivator eine halogenfreie aluminiumorganische Verbindung und außerdem einen Stereoregulator verwendet.

Gegenstand der Erfindung ist ein Verfahren zur Polymerisation von 1-Olefinen der Formel $CH_2=CH—R^4$, worin $R^4$ einen Alkylrest mit 1—8 C-Atomen bedeutet, und von Mischungen dieser 1-Olefine untereinander bzw. mit Äthylen, wobei der Äthylengehalt 0,4 bis 6 Gew.-% beträgt, sowie zur Blockcopolymerisation dieser 1-Olefine untereinander bzw. mit Äthylen mit einem Äthylengehalt bis 35 Gew.-% in Gegenwart eines Mischkatalysators, der entsteht durch Inberührungbringen eines Übergangsmetallhalogenids mit einem Magnesiumhalogenid-Komplex und Mischen des Reaktionsproduktes (=Komponente A) mit einer halogenfreien aluminiumorganischen Verbindung (=Komponente B), sowie einem Stereoregulator (=Komponente C), dadurch gekennzeichnet, daß man die Polymerisation in Gegenwart eines Mischkatalysators durchführt, zu dessen Herstellung man das Reaktionsprodukt eines Magnesiumhalogenids mit einem Elektronendonor und/oder Cyclopolyen mit dem Umsetzungsprodukt, welches durch Reduktion von Titantetrachlorid mittels einer metallorganischen Verbindung eines Metalls der I. bis III. Hauptgruppe des Periodensystems der Elemente in einem inerten Verdünnungsmittel bei einer Temperatur von —50°C bis +80°C entsteht, in Berührung bringt und die so erhaltene Komponente A des Mischkatalysators mit einer halogenfreien Alorganischen Verbindung als Komponente B und einer Verbindung aus der Gruppe, die aus Cyclopolyenen, Phosphinsäureestern, Hexamethylphosphorsäuretrisamid, 1,2-Dimethoxybenzol und aromatischen Carbonsäureestern besteht, als Komponente C mischt, wobei die Komponente C vor der Polymerisation nicht mit der Komponente B durch Mischen zur Reaktion gebracht, sondern direkt in das Polymerisationsgefäß eingeführt wird.

Der erfindungsgemäße Mischkatalysator besteht somit

A) aus einer titantrichloridhaltigen Katalysatorkomponente, die erhalten wird durch Inberührungbringen a) des Reaktionsproduktes eines Magnesiumhalogenids mit einem Elektronendonor und/oder einem Cyclopolyen und b) des Umsetzungsprodukts, das durch Reduktion von Titantetrachlorid mit einer metallorganischen Verbindung eines Metalls I. bis III. Hauptgruppe des Perioden-Systems in einem inerten Verdünnungsmittel bei Temperaturen von —50°C bis 80°C entsteht,

B) aus einer halogenfreien aluminiumorganischen verbindung, und

C) aus einem Stereoregulator.

Als Magnesiumhalogenid wird vorzugsweise Magnesiumdichlorid eingesetzt. Es kann aber auch, falls gewünscht, Magnesiumdibromid verwendet werden.

Das Reaktionsprodukt des Magnesiumhalogenids mit dem Elektronendonor und/oder dem Cyclopolyen (a) kann in an sich bekannter Weise in Anwesenheit oder Abwesenheit eines inerten Lösungsmittels bei einer Temperatur von —20°C bis 100°C hergestellt werden, beispielsweise durch Erhitzen des Magnesiumhalogenids in einer Lösung des Reaktionspartners, Suspendieren des Mghalogenids im flüssigen Reaktionspartner oder gemeinsames Mahlen beider Komponenten, wobei durch die Reibungswärme beim Mahlen auxh jöhere Temperaturen auftreten können. Die optimale Temperatur ist abhängig von der thermischen Stabilität des verwendeten Elektronendonators bzw. Cyclopolyens.

Vorzugsweise wird in Abwesenheit eines Lösungsmittels gearbeitet, z.B. durch Mahlen des Magnesiumhalogenids mit der reinen Elektronendonorverbindung und/oder dem Cyclopolyen. Das Mahlen wird dabei vorzugsweise in einer Vibrationsmühle durchgeführt, Die Mahldauer beträgt 1—120 Stunden oder auch länger, vorzugsweise 30 bis 100 Stunden. Es können aber auch andere Zerkleinerungsmethoden verwendet werden, bei denen genügend große Scherkräfte auf das Mahlgut ausgeübt werden.

Das Molverhältnis des eingesetzten Magnesiumhalogenids zur Elektronendonatorverbindung und/oder Cyclopolyen beträgt mehr als 2:1. Bevorzugt wird ein Molverhältnis von 3 bis 15:1, besonders bevorzugt wird ein Molverhältnis von 4,5 bis 8:1.

3

Das für die Herstellung der Katalysatorkomponente A eingesetzte Reaktionsprodukt aus Magnesiumhalogenid und Elektronendonatorverbindung und/oder Cyclopolyen soll eine Spezifische Oberfläche von mindestens 1 m²/g, vorzugsweise eine Spezifische Oberfläche größer als 4 m²/g haben.

Als Elektronendonatorverbindungen können Äther, Amide, Amine, Ester, Ketone, Nitrile, Phosphine, Phosphinsäureester, Phosphoramide, Thioäther oder Thioester eingesetzt werden. Die verwendeten Elektronendonatorverbindungen sollen jedoch keinen an Sauerstoff, Stickstoff oder Schwefel gebundenen Wasserstoff enthalten.

Geeignete Elektronendonatorverbindungen sind beispielsweise Diäthyläther, Dioxan, Anisol, Dimethylacetamid, Tetramethyläthylendiamin, Essigsäureäthylester, Aceton, Acetophenon, Acetonitril, Benzonitril, Triäthylphosphin, Triphenylphosphin, Methyläthylphosphinsäureisobutylester oder Hexamethylphosphorsäuretrisamid.

Bevorzugt aber werden als Elektronendonatorverbindungen Ester von aromatischen Carbonsäuren wie Benzoesäureäthylester, Benzoesäuremethylester, p-Toluylsäureäthylester, p-Toluylsäuremethylester, Anissäureäthylester oder Anissäuremethylester verwendet.

Zur Umsetzung mit dem Magnesiumhalogenid sind auch Cyclopolyene wie beispielsweise Cycloheptatrien-(1,3,5) oder Cyclooctatetraen geeignet.

Das Umsetzungsprodukt (b), das durch Reduktions von Titantetrachlorid mit metallorganischen Verbindungen der Elemente der I. bis III. Hauptgruppe des Perioden-Systems hergestellt wird, its kein reines Titantrichlorid, sondern enthält in unbekannter Weise gebundene metallorganische Verbindung.

Als Reduktionsmittel werden vorzugsweise aluminiumorganische Verbindungen der allgemeinen Formel $AlR_{3-n}X_n$, wobei R einen Alkylrest mit 1—6 Kohlenstoffatomen und X R oder Halogen bedeuten und n=0 bis 2 ist, eingesetzt. Beispiele derartiger Verbindungen sind Aluminiumdiäthylchlorid, -dipropylchlorid, -diisopropylchlorid, -diisobutylchlorid, vorzugsweise Aluminiumdiäthylchlorid, oder Aluminiumalkylsesquichloride, welche äquimolekulare Gemische von Aluminiumdialkylchlorid und Aluminiumalkyldichlorid sind, vorzugsweise Aluminiumäthylsesquichlorid, oder Aluminiumtrialkyle, wie Aluminiumtrimethyl, -triäthyl, -tripropyl, -triisobutyl, -tridiisobutyl, vorzugsweise Aluminiumtriäthyl und Aluminiumtriisobutyl, aber auch die Umsetzungsprodukte Von Aluminiumtrialkylen oder Aluminiumdialkylhydriden, die Alkylreste mit 1—6 Kohlenstoffatomen enthalten, mit 4—8 Kohlenstoffatomen enthaltenden Dienen. Ein Beispiel für die letztgenannten Verbindungen ist das Umsetzungsprodukt von Aluminiumtriisobutyl oder Aluminiumdiisobutylhydrid mit Isopren, das im Handel unter dem Namen Aluminiumisoprenyl erhältlich ist.

Die Reduktion erfolgt in einem inerten gesättigten flüssigen aliphatischen Kohlenwasserstoff, wie Butan, Pentan, Hexan, Heptan, Octan, Cyclohexan oder einem Kohlenwasserstoffgemisch, wie beispielsweise einer Benzinfraktion mit einem Siedebereich von 130° bis 170°C, oder in einem flüssigen aromatischen Kohlenwasserstoff wie Benzol. Toluol, Xylole. Vorzugsweise wird Hexan, die vorgenannte Benzinfraktion oder Toluol verwendet.

Bei der Umsetzung von Titantetrachlorid mit den Aluminiumorganischen Verbindungen kann so verfahren werden daß das Titantetrachlorid gegebenenfalls in einem inerten Kohlenwasserstoff gelöst, zu einer Lösung der aluminiumorganischen Verbindung gegeben wird, oder auch umgekehrt. Es ist aber auch möglich, beide Komponenten gleichzeitig in ein inertes Reaktionsmedium einzuführen. Vorzugsweise wird die aluminiumorganische Verbindung zum Titantetrachlorid gegeben.

Das Molverhältnis von Titantetrachlorid zu aluminiumorganischer Verbindung bei der Reduktion kann in dem Bereich von 1:0,2 bis 1:1,5 variiert werden, vorzugsweise wird bei einem Molverhältnis von 1:0,33 bis 1:1,1 gearbeitet.

Die Reduktion von $TiCl_4$ durch die aluminiumorganische Verbindung kann auch in Anwesenheit eines Äthers vorgenommen werden; vorzugsweise wird der Äther mit dem Titantetrachlorid gemischt und dann die aluminiumorganische Verbindung hinzugefügt. Es werden Äther der allgemeinen Formel $R^1$—O—$R^2$ eingesetzt, wobei $R^1$ und $R^2$ gleich oder verschieden sein können und wobei $R^1$ und $R^2$ einen Alkylrest mit 2—18 Kohlenstoffatomen bedeuten Beispiele sind Diäthyläther, Di-n-Propyläther, Di-n-Butyläther, Äthyl-n-Butyläther, Di-isoamyläther, Dioctyläther, Di-dodecyläther, vorzugsweise wird der Di-n-Butyläther und der Diisoamyläther eingesetzt. Das Molverhältnis Titantetrachlorid zu Äther beträgt 1:0,3 bis 1:1,5, vorzugsweise 1:0,9 bis 1:1,1.

Bei der Reduktion des Titantetrachlorids mit der aluminiumorganischen Verbindung arbeitet man bei einer Temperatur von −50°C bis +80°C, vorzugsweise bei −20°C bis +25°C.

Zur Vervollständigung der Reduktion kann das Reaktionsprodukt einer thermischen Behandlung bei einer Temperatur von 40 bis 150°C unterworfen werden; die thermische Behandlung kann in einer, aber auch in 2 Stufen erfolgen, beispielsweise in der ersten Stufe bei 60°C bis 95°C, in der 2. Stufe bei einer Temperatur größer als 100°C.

Bei der Umsetzung von Titantetrachlorid mit der aluminiumorganischen Verbindung, gegebenenfalls in Gegenwart von Äthern, entstehen in dem Reaktionsmedium lösliche und unlösliche Reaktionsprodukte. Das unlösliche Reaktionsprodukt (b) kann isoliert werden und durch Waschen mit dem bei der Reduktion verwendeten Lösungsmittel von den löslichen Reaktionsprodukten befreit werden.

Sodann wird das Magnesiumdihalogenid-Elektronendonator-Reaktionsprodukt und/oder -Cyclopolyen-Reaktionsprodukt (a) mit dem Umsetzungsprodukt von Titantetrachlorid mit einer metall-

4

organischen Verbindung (b) in Berührung gebracht. Dabei kann das letztere entweder als reiner, vom Reaktionsmedium abgetrennter Feststoff oder zusammen mit den anderen Reaktionsprodukten aus der Reduktionsreaktion eingesetzt werden. Möglich ist aber auch die Verwendung nur der löslichen Reaktionsprodukte.

Das Inberührungbringen erfolgt vorzugsweise in einem inerten Kohlenwasserstoffmedium, wobei vorteilahfterweise das Umsetzungsprodukt aus Titantetrachlorid und der metallorganischen Verbindung (b) vorgelegt wird und das Reaktionsprodukt (a), suspendiert in einem inerten Kohlenwasserstoff, zugegeben wird, Es ist auch möglich, (a) und (b) gleichzeitig zusammenzuführen. Besonders bevorzugt ist, die Komponente (a) vorzulegen und die Komponente (b) zuzugeben. Das Inberührungbringen erfolgt in dem Temperaturbereich von −50°C bis 150°C, vorzugsweise 20° bis 100°C.

Die Menge der eingesetzten Reaktanten (a) und (b) ist für die Aktivität der Katalysatoren und dem Asche- und Halogengehalt der Polymerisate von entscheidender Bedeutung. Der Gehalt an dem Reaktionsprodukte Magensiumhalogenid-Elektronendonator und/oder -Cyclopolyen (a) in der Katalysatorkomponente A soll möglichst niedrig gehalten werden. Die eingesetzte Menge Titantrichlorid soll größer als 30 Gew.-%, vorzugsweise 40 bis 200 Gew.-%, insbesondere 50 bis 140 Gew.-%, bezogen auf das Reaktionsprodukt (a), betragen.

Das Inberührungbringen der Komponenten (a) und (b) zur Herstellung der titantrichloridhaltigen Mischkatalysatorkomponente A kann auch durch Trockenmahlen oder Mahlen in einem Kohlenwasserstoff erfolgen.

Das Inberührungbringen erfolgt über einen Zeitraum von 10 min bis 600 min, vorzugsweise 60 bis 300 min.

Als halogenfreie aluminiumorganische Verbindung (Komponente B) eignen sich vor allem verzweigte, unsubstituierte Aluminiumalkyle der allgemeinen Formel $AlR_3^3$, wobei $R^3$ einen Alkylrest mit 1—10 Kohlenstoffatomen bedeutet, wie z.B. Aluminiumtrimethyl, Aluminiumtriäthyl, Aluminiumtriisobutyl, Aluminiumtridiisobutyl. Weiterhin geeignet sind die Reaktionsprodukte aus Aluminiumtriisobutyl bzw. Aluminiumdiisobutylhydrid und Isopren, die unter dem Namen Aluminiumisoprenyl im Handel sind. Besonders geeignet sind Aluminiumtriäthyl und Aluminiumtriisobutyl. Das Molverhältnis der Komponente B zu der titanrichloridhaltigen Mischkatalysatorkomponente A soll bei dem erfindungsgemäßen Verfahren zwischen 5 und 200:1, vorzugsweise zwischen 15 und 50:1 liegen.

Die Mischkatalysatorkomponente C besteht aus einem Stereoregulator, der ausgewählt wird aus der Gruppe die gebildet wird von Cyclopolyenen aromatischen Carbonsäureestern, Phosphinsäureestern, Hexamethylphosphorsäuretrisamid und 1,2-Dimethoxybenzol. Unter den Cyclopolyenen sind hervorzuheben Cycloheptatrien-(1,3,5), Cyclooctatetraen, von den aromatischen Carbonsäureestern werden bevorzugt verwendet Methylbenzoat, Äthylbenzoat, p-Toluylsäureäthylester, p-Toluylsäuremethylester, Anissäureäthylester und Anissäuremethylester, von den Phosphinsäureestern der Methyläthylphosphinsäureisobutylester. Die Verbindungen können allein oder in Mischung eingesetzt werden, beispielsweise Cycloheptatrien-(1,3,5) und aromatische Carbonsäureester oder Cycloheptatrien-(1,3,5) und Methyläthylphosphinsäureester. Die Komponente C soll nicht mit der Mischkatalysatorkomponente B vor der Polymerisation durch Michen zur Reaktion gebracht werden, Sondern direkt in das Polymerisationsgefäß eingeführt werden. Die Menge an Katalysatorkomponente C richtet sich nach der Menge an Katalysatorkomponente B. Das Molverhältnis Komponente B zu Komponente C soll größer als 1:1, vorzugsweise 1,5:1 bis 15:1 sein.

Mit der erfindungsgemäßen Kombination der Katalysatorkomponenten A, B und C wird ein Mischkatalysatorsystem erhalten, mit welchem bei der Polymerisation von 1-Olefinen nicht nur eine hohe Aktivität, sondern auch eine hohe Stereospezifität erreicht wird.

Die 1-Olefine sind solche der Formel $CH_2=CHR^4$, worin $R^4$ einen Alkylrest mit 1 bis 8 Kohlenstoffatomen bedeutet. Propylen, Buten-(1), Penten-(1), 3-Methylbuten-(1), 4-Methylpenten-(1) und 3-Methylpenten-(1) werden vorzugsweise mit Hilfe des erfindungsgemäßen Katalysators polymerisiert, insbesondere jedoch Propylen. Neben der Homopolymerisation ist der erfindungsgemäße Mischkatalysator auch geeignet für die Polymerisation von Mischungen dieser Olefine untereinander und/oder mit Äthylen, wobei der Gehalt der Mischung an einem der genannten 1-Olefine 99,6 bis 94 Gewichts-% und der Gehalt an Äthylen 0,4 bis 6 Gewichts-%, jedesmal bezogen auf die Gesamtmenge der Monomeren, beträgt. Besonders bevorzugt sind Mischungen von Propylen mit kleinen Mengen Äthylen, wobei der Äthylengehalt 0,5 bis 5, vorzugsweise 1,5 bis 3 Gewichts-% beträgt. Weiterhin ist der erfindungsgemäße Katalysator zur Blockcopolymerisation dieser 1-Olefine untereinander und/oder mit Äthylen geeignet, wobei der Gehalt an Äthylen 8 bis 35 Gewichts-% ist, vorzugsweise zur Herstellung von Blockcopolymerisaten aus Propylen und Äthylen. Diese Blockcopolymerisate zeichnen sich durch eine Hohe Härte und eine ausgezeichnete Schlagzähigkeit bei Temperaturen unter 0°C aus.

Die Polymerisation kann kontinuierlich oder diskontinuierlich in Suspension oder in der Gasphase durchgeführt werden bei einem Druck von 1 bis 50 bar, vorzugsweise 1 bis 40 bar.

Die Suspensionspolymerisation wird in einem inerten Lösungsmittel durchgeführt. Verwendet werden können eine olefinarme Erdölfraktion mit einem Siedebereich von 60 bis 250°C, welche sorgfältig von Saurestoff, Schwefelverbindungen und Feuchtigkeit befreit werden muß, sowie gesättigte aliphatische und cycloaliphatische Kohlenwasserstoffe, wie Butan, Pentan, Hexan, Heptan, Cyclohexan, Methylcyclohexan oder Aromaten, wie Benzol, Toluol und Xylol. Die Suspensions-

5

# 0 007 061

polymerisation kann auch vorteilhaft unter Verwendung des zu polymerisierenden 1-Olefins als Dispergiermittel, zum Beispiel in flüssigem Propylen, durchgeführt werden.

Eine weitere Verfahrensweise besteht darin, daß die Polymerisation in Abwesenheit eines Lösungsmittels in der Gasphase, zum Beispiel in einem Wirbelbett, durchgeführt wird.

Das Molekulargewicht wird, falls notwendig, durch Zugabe von Wasserstoff geregelt.

Die Menge an Katalysatorkomponente A richtet sich nach den vorgesehenen Reaktionsbedingungen, insbesondere nach dem Druck und nach der Temperatur. Man verwendet im allgemeinen 0,005 bis 5 mMol $TiCl_3$ pro Liter Lösungsmittel bei der Suspensionspolymerisation oder pro Liter Reaktorvolumen bei der Gasphasenpolymerisation, vorzugsweise 0,01 bis 3 mMol $TiCl_3$.

Das erfindungsgemäße Verfahren gestattet die Herstellung von Polyolefinen, insbesondere von Polypropylen mit hohen Kontaktausbeuten und ausgezeichneter Stereospezifität (Isotaktischer Index >94%, bzw. Kugeldruckhärten größer als 65 $N/mm^2$), so daß eine aufwendige Katalysatorentfernung nicht notwendig ist. Weiter zeichnen sich die nach diesem Verfahren hergestellten Polymerisate durch sehr niedrige Katalysatorrestgehalte, insbesondere sehr niedrige Halogengehalte (Cl=<50 ppm) und dadurch bedingt geringe Korrosionsneigung, hohes Schüttgewicht (>400 g/l) bei geringem Feinanteil von <100 $\mu$m und sehr gute Farbwerte aus.

Ein weiterer Vorteil gegenüber allen Verfahren, bei welchen Katalysatorträger mit Titantetrachlorid in flüssiger Form behandelt werden, besteht darin, daß die Handhabung von großen Mengen Titantetrachlorid entfällt, und die aufwendige Vernichtung von überschüssigem Titantetrachlorid sich erübrigt.

Die in den Beispielen genannte Benzinfraktion weist einen Siedebereich von 130 bis 170°C auf und wurde vor der Verwendung hydriert und von Sauerstoff befreit.

Beispiel 1

1.1. Herstellung der Katalysatorkomoponente A1

702 g wasserfreies Magnesiumchlorid (7,37 Mol) und 170,4 g Benzoesäureäthylester (1,13 Mol) werden in einer Vibrationsmühle 100 Stunden unter Stickstoff gemahlen. Das verwendete Stahlgefäß hat einen Inhalt von 5 l, es werden 15 kg Stahlkugeln aus rostfreiem Stahl mit einem Durchmesser von 15 mm eingesetzt.

In einem 10 l-Rührgefäß werden unter Ausschluß von Luft und Feuchtigkeit 1090 ml einer hydrierten, sauerstoffreien Benzinfraktion (Kp 130 bis 170°C) und 550 ml Titantetrachlorid (5 Mol) vorgelegt. Bei 0°C wird innerhalb von 8 Stunden unter Rühren (250 U/min) und Stickstoffüberlagerung eine Lösung von 1111,2 g Aluminiumäthylsesquichlorid (enthält 4,5 Mol Aluminiumdiäthylmonochlorid) in 3334 g der gleichen Benzinfraktion zugetropft. Es scheidet sich ein rotbrauner feiner Niederschlag aus. Danach wird 2 Stunden bei 0°C und anschließend 12 Stunden bei Raumtemperatur weitergerührt.

Anschließend wird unter Rühren und Stickstoffüberlagerung 4 Stunden auf 60°C erhitzt. Nach dem Abkühlen und Absitzen des Niederschlages wird die überstehende Mutterlauge dekantiert und das feste Reaktionsprodukt dreimal mit je 2000 ml der Benzinfraktion ausgewaschen. Für die weiteren Umsetzungen wird der Feststoff in einer solchen Menge der Benzinfraktion suspendiert, daß eine Konzentration von 1 Mol $TiCl_3$ pro 1 l erreicht wird. Die Bestimmung des Gehaltes der Suspension an dreiwertigem Titan erfolgt durch Titration mit einer $Ce^{III}$-Lösung.

6,56 g des Umsetzungsproduktes aus Magnesiumchlorid und Benzoesäureäthylester werden in 100 ml der Benzinfraktion suspendiert. Unter Rühren und Argonüberlagerung werden bei 80°C 19,3 ml (19,3 mMol Ti) der $TiCl_3$ enthaltenden Suspension innerhalb von 10 Minuten zugegeben. Anschließend wird das Reaktionsgemisch 2 Stunden bei 80°C gehalten. Nach dem Abkühlen auf Raumtemperatur wird der Feststoff (Katalysatorkomponente A1) unter Ausschluß von Luft und Feuchtigkeit abgesaugt und 2 mal mit je 100 ml der Benzinfraktion ausgewaschen und in 100 ml Benzinfraktion suspendiert. Der Titangehalt wird colorimetrisch bestimmt.

1.2. Propylenpolymerisation

In einem 70 l-Rührautoklaven werden unter Ausschluß von Luft und Feuchtigkeit bei Raumtemperatur 35 l Flüssigpropylen und 0,2 bar Wasserstoff vorgelegt und die Katalysatorkomponenten, mit je 5 l Flüssigpropylen verdünnt, aus einer Schleuse in folgender Reihenfolge und in den folgenden Mengen zugegeben: 1,25 mMol (bezogen auf Ti) der $TiCl_3$ enthaltenden Katalysatorkomponente A1, dann 8,25 mMol (=1,32) ml p-Toluylsäureäthylester als Stereoregulator (Komponente C) und schließlich 31,25 mMol (=4,3 ml) Aluminiumtriäthyl (Komponente B). Die Polymerisation setzt nach wenigen Sekunden ein, der Kesselinhalt wird durch Wärmezufuhr innerhalb von 10 Minuten auf eine Temperatur von 75°C gebracht und dann bei dieser Temperatur gehalten. Der Kesseldruck beträgt 34 bar. Nach einer Polymerisationsdauer von 3 Stunden wird auf Raumtemperatur abgekühlt und das Polymere von dem nicht polymerisierten Flüssigpropylen über ein Kerzenfilter abgetrennt. In dem Filtrat wird durch Verdampfen des Propylens und Auflösen des Rückstandes (aktaktisches Polypropylen) der Gehalt an bei der Polymerisation entstandenem löslichen Anteil bestimmt. Der Feststoff wird in ca. 20 l der obengenannten Benzinfraktion suspendiert und über eine Drucknutsche filtriert. Nach dem Trocknen im Vakuumtrockenschrank bei 70°C werden 5,9 kg Polypropylen erhalten, das entspricht einer Kontaktausbeute von 98,6 kg Polypropylen pro 1 g Ti. Das Polymerisat besitzt ein Schüttgewicht von 400 g/l und eine Kugeldruckhärte, gemessen nach DIN 53456, von 77 N/mm². Die reduzierte Spezifische Viskosität (gemessen 0,1 %ig in Dekalin bei 135°C) beträgt 2,6 dl/g. Bei der Polymerisation sind 3,8 Gew.-% lösliches (ataktisches) Polypropylen (bezogen auf Gesamtpolymerisat) entstanden

Beispiel 2
2.1. Herstellung der Katalysatorkomponente A2
   In einem 1 l-Vierhalskolben, versehen mit Rüher und Thermometer, werden unter Argonüberlagerung 600 ml Toluol, 360 mMol (60,84 ml) Di-n-Butyläther und 360 mMol (39,6 ml) Titantetrachlorid vorgelegt (orangerote Lösung). Dann wird bei Raumtemperatur unter Rühren innerhalb von 5 Minuten eine Lösung von 180 mMol (=22,7 ml) Aluminiumdiäthylmonochlorid in 60 ml Toluol Zugegeben. Das Reaktionsgemisch wird durch kühlen bei Raumtemperatur gehalten. Nach 3-stündigem Rühren scheidet sich ein brauner Niederschlag aus. Die Suspension wird 24 Stunden bei Raumtemperatur gerührt. Die cerimentrische Bestimmung des Ti$^{III}$-Gehaltes zeigt, daß 90% der eingesetzten Ti$^{IV}$-Verbindung in die 3-wertige Valenzstufe überführt worden sind. Der Titangehalt (Gesamt Ti) der Kontaktsuspension wird colorimetrisch bestimmt und stimmt mit der eingesetzten Ti-Menge überein.
   16,2 g des gemäß Beispiel 1.1 hergestellten Umsetzungsproduktes von Magnesiumchlorid und Benzoesäureäthylester werden in 100 ml Toluol suspendiert. Unter Rühren und Argonüberlagerung werden bei 80°C 120,7 ml (=54 mMol Ti) der oben beschriebenen TiCl$_3$ enthaltenden Suspension innerhalb von 10 Minuten zugegeben. Anschließend wird das Reaktionsgemisch 2 Stunden bei 80°C gehalten. Nach dem Abkühlen auf Raumtemperatur wird die Katalysatorkomponente A2 unter Ausschluß von Luft und Feuchtigkeit abgesaugt und 2 mal mit je 100 ml Toluol und dann 2 mal mit je 100 ml der auf 70°C erwärmten Benzinfraktion ausgewaschen und schließlich in 500 ml der Benzinfraktion suspendiert. Der Ti-Gehalt wird colorimetrisch bestimmt.

2.2. Propylenpolymerisation
   Die Propylenpolymerisation und Aufarbeitung erfolgt unter den gleichen Bedingungen wie im Beispiel 1 under 1.2. angegeben, jedoch beträgt die Polymerisationstemperatur 70°C. Es werden die Katalysatorkomponenten in der folgenden Reihenfolge zugegeben:

1 mMol (bezogen auf Ti=9,3 ml) der TiCl$_3$ enthaltenden Katalysatorkomponente A2, 6,6 mMol (=1,69 ml) p-Toluylsäureäthylester

   als Stereoregulator (Komponente C) und 25 mMol (3,2 ml) Aluminiumtriäthyl (Komponente B). Es werden 8,6 kg isotaktisches Polypropylen erhalten. Das entspricht einer Kontaktausbeute von 179,6 kg Polypropylen pro 1 g Ti. Das Schüttgewicht beträgt 430 g/l und die reduzierte spezifische Viskosität (gemessen 0,1 %ig in Dekalin bei 135°C) 13 dl/g. Die Kugeldruckhärte liegt bei 80 N/mm². Das Polymerisat enthält keine Feinanteile Kleiner als 60 $\mu$m Der Cl-Gehalt beträgt 30 ppm. In der Mutterlauge wird ein Wachsanteil von 1,9% (bezogen auf Gesamtpolymerisat gefunden.

Beispiel 3
3.1. Herstellung der Katalysatorkomponente A3
   In einem 250 ml-Vierhalskolben, versehen mit Rührer und Thermometer, werden unter Argonüberlagerung 150 ml Toluol, 15,2 ml (=90 mMol) Di-n-Butyläther und 9,9 ml (=90 mMol) Titantetrachlorid vorgelegt. Bei 0°C wird innerhalb von 30 Minute eine Lösung von 45 mMol (=6,17 ml) Aluminiumtriäthyl in 15 ml Toluol zugetropft. Die Reaktionsmischung, aus der sich nach etwa 2 Stunden ein dunkler Niederschlag ausscheidet, wird 3 Stunden bei 0°C gehalten und anschließend 24 Stunden bei Raumtemperatur gerührt. Die cerimetrische Bestimmung des Ti$^{III}$-Gehaltes der Suspension zeigt, daß mehr als 95% des eingesetzten Titantetrachlorids reduziert worden sind.
   6,8 g des gemäß Beispiel 1.1 hergestellten Umsetzungsproduktes aus Magnesiumchlorid und Benzoesäureäthylester werden in 100 ml Toluol suspendiert. Unter Rühren und Argonüberlagerung werden bei 80°C 43,6 ml (=20 mMol Ti) der obigen TiCl$_3$ enthaltenden Suspension innerhalb von 10 Minuten zugegeben. Anschließend wird das Reaktionsgemisch 2 Stunden bei 80°C gehalten. Nach dem Abkühlen auf Raumtemperatur wird der Feststoff unter Aus schluß von Luft und Feuchtigkeit abgesaugt und 2 mal mit je 100 ml Toluol und dann 2 mal mit je 100 ml der auf 70°C erwärmten Benzinfraktion ausgewaschen und schließlich in 100 ml der Benzinfraktion suspendiert. Der Ti-Gehalt wird colorimetrisch bestimmt.

3.2. Propylenpolymerisation
   In einem mit Stickstoff und Propylen gespülten 16 l-Autoklaven werden bei Raumtemperatur bei einem Wasserstoffdruck von 0,2 bar aus einer Schleuse 0,375 mMol (bezogen auf Ti) der TiCl$_3$ enthaltenden Katalysatorkomponente A3, suspendiert in 6,2 l Flüssigpropylen, dann 2 mMol (0,32 ml) p-Toluylsäureäthylester als Stereoregulator (Komponente C), gelöst in 3,1 l Flüssigpropylen und

schließlich 10 mMol (1,37 ml) Aluminiumtriäthyl (Komponente B) ebenfalls gelöst in 3,1 l Flüssigpropylen, eingeführt. Die Polymerisation setzt sofort ein. Die Kesseltemperatur wird durch Wärmezufuhr innerhalb von 10 min auf 75°C gebracht und dann auf dieser Höhe gehalten. Der Kesseldruck beträgt 33,5 bar. Nach einer Polymerisationsdauer von 3 Stunden wird auf Raumtemperatur abgekühlt und entspannt. Man erhält nach dem Trocknen im Vakuum bei 70°C 3,05 kg Polypropylen, das entspricht einer Kontaktausbeute von 170 kg/g Ti. Das Polymerisat besitzt ein Schüttgewicht von 460 g/l. Die reduzierte spezifische Viskosität (gemessen 0,1 %ig in Dekalin bei 135°C) beträgt 4,5 dl/g. Das Polymerisat enthält keine Feinanteile und die Kugeldruckhärte liegt bei 7 l N/mm².

## Beispiel 4

### 4.1. Herstellung der Katalysatorkomponente A4

Die Reduktion wird unter den gleichen Bedingungen und mit den gleichen Mengen wie im Beispiel 2 unter 2.1. angegeben durchgeführt. Nach 3-tägigem Rühren der Suspension wird der ausgeschiedene Feststoff abgetrennt und mit Toluol ausgewaschen. Das Filtrat und die Waschlösungen werden vereinigt und in der dunkelbraunen bis schwarzen Lösung das Gesamttitan colorimetrisch und der Gehalt an 3-wertigem Titan cerimetrisch bestimmt. Es zeigt sich, daß 75% des Gesamttitans in der Lösung als $Ti^{III}$ vorliegt.

3,3 g des gemäß Beispiel 1.1 hergestellten Umsetzungsproduktes von Magnesiumchlorid und Benzoesäureäthylester werden in 10 ml Toluol suspendiert, danach werden unter Rühren und Argonüberlagerung bei 80°C 180 ml (entsprechend 11 mMol Ti) der dunkelbraunen bis schwarzen, $TiCl_3$ enthaltenden Lösung innerhalb von 10 Minuten zugetropft. Anschließend wird das Reaktionsgemisch 2 Stunden bei 80°C gehalten. Nach dem Abkühlen auf Raumtemperatur wird der Feststoff unter Ausschluß von Luft und Feuchtigkeit abgesaugt und 2 mal mit je 100 ml Toluol und dann 2 mal mit je 100 ml der auf 70°C erwärmten Benzinfraktion ausgewaschen und schließlich in 100 ml der Benzinfraktion suspendiert. Der Ti-Gehalt in der Suspension wird colorimetrisch bestimmt. In dem Filtrat kann cerimetrisch kein 3-wertiges Titan nachgewiesen werden.

### 4.4. Propylenpolymerisation

Die Propylenpolymerisation und Aufarbeitung erfolgen unter den gleichen Bedingungen wie im Beispiel 1 under 1.2. angegeben. Es werden eingesetzt 0,75 mMol (bezogen auf Ti) der $TiCl_3$ enthaltenden Katalysatorkomponente A, 6,6 mMol (1,06 ml) p-Toluylsäureäthylester als Stereoregulator (Komponente C) und 25 mMol (3,2 ml) Aluminiumtriäthyl (Komponente B). Es werden 7,2 kg isotaktisches Polypropylen erhalten, das entspricht einer Kontaktausbeute von 200,4 kg Polypropylen pro 1 g Ti. Das Polymerisat enthält keine Feinanteile; das Schüttgewicht beträgt 458 g/l, die reduzierte spezifische Viskosität (gemessen 0,1 %ig im Dekalin bei 135°C) beträgt 3,4 dl/g und die Kugeldruckhärte 80 N/mm². Im Polymerisat wird ein Cl-Gehalt von 28 ppm festgestellt. Bei der Verarbeitung wird auch ohne Zugabe eines Säurefängers, wie Ca-Stearat, keine Korrosion beobachtet.

## Beispiel 5

### 5.1. Herstellung der Katalysatorkomponente A5

In einem 250 ml Vierhalskolben, versehen mit Rührer und Thermometer werden unter Ausschluß von Luft und Feuchtigkeit (Argonüberlagerung) 70 ml einer 20 Gew.-% Lösung von Aluminiumisoprenyl (50 mMol) in der Benzinfraktion vorgelegt. Bei −2°C werden 11 ml Titantetrachlorid (100 mMol) innerhalb von 2 Stunden zudosiert und anschließend 3 Stunden bei −2°C gerührt. Es scheidet sich ein dunkelbrauner Niederschlag aus. Nach 24-Stündigem Rühren bei Raumtemperatur wird der Gehalt an 3-wertiger Titanverbindung cerimetrisch bestimmt. Das Titantetrachlorid ist quantitativ reduziert. Durch Zugabe von ca. 30 ml Benzinfraktion wird ein Gehalt von 1 Mol $TiCl_3$/l eingestellt.

4,2 g des gemäß Beispiel 1.1. hergestellten Umsetzungsproduktes von Magnesiumchlorid mit Benzoesäureäthylester werden in 50 ml der Benzinfraktion suspendiert. Unter Rühren und Argonüberlagerung werden bei 80°C 12 ml (entsprechend 12 mMol Ti) der obigen $TiCl_3$ enthaltenden Suspension innerhalb von 10 Minuten zugegeben. Anschließend wird das Reaktionsgemisch 2 Stunden bei 80°C gehalten. Nach dem Abkühlen auf Raumtemperatur wird der Feststoff abgesaugt und 2 mal mit je 100 ml der Benzinfraktion ausgewaschen und in 100 ml der Benzinfraktion suspendiert. Der Titangehalt wird colorimetrisch bestimmt.

### 5.2. Propylenpolymerisation

Die Polymerisation wird unter den Bedingungen wie in Beispiel 3 unter 3.2. angegeben durchgeführt. Es werden eingesetzt: 0,5 mMol (bezogen auf Ti) der nach 5.1 hergestellten, $TiCl_3$ enthaltenden Katalysatorkomponente A5, 2,3 mMol (0,37 ml) p-Toluylsäureäthylester als Stereoregulator (Komponente C) und 10 mMol (1,37 ml) Aluminiumtriäthyl (Komponente B). Es wird eine Ausbeute von 1,8 kg Polypropylen erhalten, das entspricht einer Kontaktausbeute von 75,3 kg pro 1 g Ti. Das Schüttgewicht beträgt 350 g/l und die reduzierte spezifische Viskosität (gemessen 0,1 %ig in Dekalin bei 135°C), 4,8 dl/g. Das Polymerisat besitzt eine Kugeldruckhärte von 66 N/mm².

Beispiele 6—11

Die in der Tabelle angegebenen Mengen wasserfreien Magnesiumchlorids und aufgeführten organischen Verbindungen werden in einer Vibrationsmühle 100 Stunden unter Stickstoff gemahlen. Das verwendete Stahlgefäß hat einen Inhalt von 1 l, es werden 2 kg rostfreie Stahlkugeln mit einem Durchmesser von 15 mm eingefüllt.

8,1 g der in der Tabelle aufgeführten Reaktionsprodukte von Magnesiumchlorid und den genannten organischen Verbindungen werden in 50 ml Toluol suspendiert. Unter Rühren und Argonüberlagerung bei 80°C werden 60,35 ml (=27 mMol Ti) der nach Beispiel 2 hergestellten TiCl$_3$ enthaltenden Suspension innerhalb von 10 Minuten zugetropft. Anschließend wird das Reaktionsgemisch 2 Stunden bei 80°C gehalten. Nach dem Abkühlen auf Raumtemperatur wird der Feststoff unter Ausschluß von Luft und Feuchtigkeit abgesaugt und 2 mal mit je 50 ml Toluol und dann 2 mal mit je 50 ml der auf 70°C erwärmten Benzinfraktion suspendiert. Der Ti-Gehalt wird colorimetrisch bestimmt.

Propylenpolymerisation

Die Propylenpolymerisation wird mit den in Beispiel 3 unter 3.2. angegebenen Bedingungen und Katalysatormengen durchgeführt. Die Kontaktausbeuten, die relativen spezifischen Viskositäten, die Schüttgewichte und die Kugeldruckhärten sind ebenfalls in der Tabelle aufgeführt.

TABELLE

| Beispiel | Umsetzung von $MgCl_2$ mit organischen Verbindungen | | | $C_3H_6$-Polymerisation | | | |
|---|---|---|---|---|---|---|---|
| | $MgCl_2$ Menge in g | organische Verbindung Art | Menge in g | Kontakt-ausbeute kg/1 g Ti | RSV Wert dl/g | Schüttgewicht g/l | Kugeldruck-härte N/mm² |
| 6 | 73,2 | p-Toluylsäure-methylester | 17,7 | 73 | 5,1 | 380 | 69 |
| 7 | 77,2 | p-Toluylsäure-äthylester | 19,76 | 139 | 5,5 | 420 | 66 |
| 8 | 79,6 | Anissäureäthyl-ester | 23,1 | 138 | 5 | 390 | 67 |
| 9 | 72,2 | Methyläthylphos-phinsäureisobutyl-ester | 19,1 | 100 | 4,5 | 325 | 66 |
| 10 | 80,5 | Cycloheptatrien-1,3,5 | 12 | 75 | 6,0 | 337 | |
| 11 | 73 | Cyclooctatretraen | 12,4 | 84 | 5,4 | 371 | |

**0 007 061**

**Patentansprüche**

1. Verfahren zur Polymerisation von 1-Olefinen der Formel $CH_2=CH-R^4$, worin $R^4$ einen Alkylrest mit 1—8 C-Atomen bedeutet, und von Mischungen dieser 1-Olefine untereinander bzw. mit Äthylen, wobei der Äthylengehalt 0,4 bis 6 Gew.-% beträgt, sowie zur Blockcopolymerisation dieser 1-Olefine untereinander bzw. mit Äthylen mit einem Äthylengehalt bis 35 Gew.-% in Gegenwart eines Mischkatalysators, der entsteht durch Inberührungbringen eines Übergangsmetallhalogenids mit einem Magnesiumhalogenid-Komplex und Mischen des Reaktionsproduktes (=Komponente A) mit einer halogenfreinen aluminiumorganischen Verbindung (=Komponente B), sowie einem Stereoregulator (=Komponente C), dadurch gekennzeichnet, daß man die Polymerisation in Gegenwart eines Mischkatalysators durch führt, zu dessen Herstellung man das Reaktionsprodukt eines Magnesiumhalogenids mit einem Elektronendonator und/oder Cyclopolyen mit dem Umsetzungsprodukt, welches durch Reduktion von Titantetrachlorid mittels einer metallorganischen Verbindung eines Metalls der I. bis III. Hauptgruppe des Periodensystems der Elemente in einem inerten Verdünnungsmittel bei einer Temperatur von —50°C bis +80°C entsteht, in Berührung bringt und die so erhaltene Komponente A. des Mischkatalysators mit einer halogenfreien Alorganischen Verbindung als Komponente B und einer Verbindung aus der Gruppe, die aus Cyclopolyenen, Phosphinsäureestern, Hexamethylphosphorsäuretrisamid, 1,2-Dimethoxybenzol und aromatischen Carbonsäureestern besteht, als Komponente C mischt, wobei die Komponente C vor der Polymerisation nicht mit der Komponente B durch Mischen zur Reaktion gebracht, sondern direkt in das Polymerisationsgefäß eingeführt wird.

2. Verfahren nach Anspruch 1, dadurch gekennzeichnet, daß bei der Herstellung der Komponente A des verwendeten Katalysators die Menge an reduzierter Titanverbindung, die mit dem Reaktionsprodukt von Magnesiumhalogenid mit dem Elektronendonator und/oder Cyclopolyen in Berührung gebracht wird, größer ist als 30 Gew.-%, bezogen auf das Reaktionsprodukt aus Magnesiumhalogenid und Elektronendonator und/oder Cyclopolyen.

**Revendications**

1. Procédé de polymérisation d'oléfines-1 de formule $CH_2=CH-R^4$ (dans laquelle $R^4$ représente un radical alkyle ayant 1 à 8 atomes de carbone) et de mélanges de ces oléfines-1 les unes avec les autres ou avec l'éthylène, la teneur en éthylène étant de 0,4 à 6% en poids, ainsi qui de copolymérisation en blocs ou longues séquences de ces oléfines-1 les unes avec les autres ou avec de l'éthylène, avec une teneur en éthylène allant jusqu'à 35% en poids, en présence d'un catalyseur mixte que l'on obtient par mise en contact d'un halogénure de métal de transition avec un complexe d'halogénure de magnésium et mélange du produit de réaction (constituant (A) avec un composé organique de l'aluminium sans halogène (constituant B), ainsi qu'avec un régulateur de stéréospécificité (constituant C), procédé caractérisé en ce qu'on conduit la polymérisation en présence d'un catalyseur mixte pour la préparation duquel on met en contact le produit de la réaction d'un halogénure de magnésium avec un donneur d'électrons et/ou un cyclopolyène avec le produit de la réaction, que l'on obtient par réduction du tétrachlorure de titane à l'aide d'un composé organométallique dérivant d'un métal des Groupes principaux I à III du Système Périodique des Eléments, dans un diluant inerte, à une température comprise entre —50°C et +80°C et mélange du constituant A ainsi obtenu du catalyseur mixte avec un composé organique de l'aluminium sans halogène, à titre de constituant B, et avec un composé de l'ensemble formé par des cyclopolyènes, des esters de l'acide phosphinique, du trisamide hexaméthylique de l'acide phosphorique, le diméthoxy-1,2-benzène et des esters d'acides carboxyliques aromatiques, comme constituant C, le constituant C n'étant pas mis en réaction, avant la polymérisation, par mélange aved le constituant B mais étant introduit directement dans le récipient de polymérisation.

2. Procédé selon la revendiction 1, caractérisé en ce que, pour la préparation du constituant A du catalyseur que l'on utilise, la quantité du composé de titane réduit, que l'on met en contact avec le produit de réaction de l'halogénure de magnésium avec le donneur d'électrons et/ou du cyclopolyène, est supérieure à 30% en poids, par rapport au product de la réaction de l'halogénure de magnésium et du donneur d'électrons et/ou du cyclopolyène.

**Claims**

1. A process for polymerizing 1-olefins of the formula $CH_2=CH-R^4$ in which $R^4$ denotes alkyl having from 1 to 8 carbon atoms, or mixtures of said 1-olefins with one another or with ethylene in an amount of from 0.4 to 6% by weight, or for block-polymerizing said 1-olefins with one another or with up to 35% by weight of ethylene, using a mixed catalyst obtained by contacting a transition metal halide with a magnesium halide complex and mixing the reaction product (component A) with a halogen-free organo-aluminum compound (component B) and a stereoregulator (component C), which comprises carrying out the polymerization in the presence of a mixture catalyst prepared by bringing into contact the reaction product of a magnesium halide with an electron donor and/or a cyclopolyene with the reaction product obtained by reduction of titanium tetrachloride with an organic compound of

11

**0 007 061**

a metal of main groups I to III of the Periodic Table of the elements in an inert diluent at a temperature of from —50°C to +80°C, using as component B a halogen-free organoaluminum compound, using as component C a compound selected from the group consisting of cyclopolyenes, phosphinic acid esters, hexamethyl-phosphoric acid trisamide, 1,2-dimethoxybenzene and aromatic carboxylic acid esters and introducing component C directly into the polymerization vessel without reacting component C and component B by mixing said components before polymerization.

2. The process according to Claim 1, wherein during the preparation of component A of the catalyst used the amount of reduced titanium compound being brought into contact with the reaction product of magnesium halide with an electron donor and/or cyclopolyene is more than 30% by weight of the reaction product of magnesium halide with an electron donor and/or cyclopolyene.